# EUROPÄISCHE PATENTSCHRIFT

(11) **EP 1 600 365 B1**
(45) Veröffentlichungstag und Bekanntmachung des Hinweises auf die Patenterteilung: **14.11.2007**
(21) Anmeldenummer: 05104419.6
(22) Anmeldetag: 24.05.2005
(51) Int. Cl.: B62H 3/08

(54) **Motorradständer**
Motorcycle stand
Support de motocyclette

(30) Priorität: 28.05.2004 DE 102004026286
(43) Veröffentlichungstag der Anmeldung: 30.11.2005
(73) Patentinhaber: René Girod GmbH, 40764 Langenfeld (DE)
(72) Erfinder: Girod, René, 40764 Langenfeld (DE)
(74) Vertreter: Kietzmann, Lutz

(56) Entgegenhaltungen:
- GB-A- 2 303 109
- US-A- 3 430 983
- US-B1- 6 325 082

## Beschreibung

Die Erfindung betrifft einen Motorradständer zum Halten eines Zweirades, insbesondere eines Motorrades, in der aufrechten Parkposition über dessen Vorderrad oder Hinterrad, mit einem waagerechten Basisrahmenteil zur Herstellung eines sicheren Standkontakts mit dem Boden, an dem ein senkrechtes Anschlagrahmenteil zur Begrenzung der Anschlagposition des Vorderrades beziehungsweise Hinterrades angeordnet ist.

Derartige Motorradständer sind bei Zweirädern dafür vorgesehen, das dieses in der aufrechten Parkposition zu halten und somit vor dem Umfallen zu sichern. Zu diesem Zwecke ist in der Regel jedes Motorrad mit einem on-board Motorradständer ausgerüstet, der in den meisten Fällen als sogenannter Seitenständer ausgebildet ist und schwenkbar am Rahmen des Motorrades befestigt ist. Da ein solcher Seitenständer erforderliche Reparatur- oder Wartungsarbeiten am Motorrad - wie beispielsweise einen Ölwechsel - behindern würde, existieren zusätzlich Motorradständer der hier interessierenden Art, welche ein Halten des Zweirades in der aufrechten Parkposition unter Gewährleistung einer bestmöglichen Zugänglichkeit zu den zu wartenden Baugruppen des Motorrads sicherstellen. Derartige Motorradständer eignen sich neben dem Einsatz in einer Werkstatt teilweise auch zu Transportzwecken.

Aus der DE 44 20 473 A1 geht ein Motorradständer hervor, der als Montageständer in Werkstätten vorgesehen ist. Der bekannte Motorradständer besteht im Wesentlichen aus einem mit Laufrollen versehenen Rahmen, an welchem ein Heber schwenkbar gelagert ist, dessen freien Enden mit einer geeigneten Aufnahmevorrichtung des Motorrades unter dessen Motorblock verbindbar sind, wobei an dem Heber eine hydraulische Vorrichtung zum Verschwenken des Hebers aus der waagerechten Ruheposition in die senkrechte Aufbockposition angreift.

Ein Nachteil dieses bekannten Motorradständers besteht darin, dass dessen Einsatz lediglich auf den Werkstattbereich begrenzt ist, da durch die obligatorischen Laufrollen die erforderliche Standfestigkeit bei Anhängertransport nicht gewährleistet werden kann. Zusätzliche Befestigungsmaßnahmen wären insoweit erforderlich. Ein weiterer Nachteil dieses bekannten Motorradständers besteht darin, dass die in Form eines pumpbetätigbaren Hydraulikzylinders ausgebildete hydraulische Vorrichtung einer turnusgemäßen Wartung bedarf, damit beispielsweise ein Ölverlust durch verschlissene Dichtungen verhindert wird.

Durch die in den Motorradständer integrierte hydraulische Vorrichtung ergibt sich eine insgesamt recht aufwändige und damit teure Konstruktion.

Aus der DE 196 07 703 A1 ist ein weiterer Motorradständer des Standes der Technik bekannt, welcher ebenfalls mit einer hydraulischen Vorrichtung ausgestattet ist, hier in Form einer Hubeinrichtung zum Anheben oder Absenken eines Schwenkarms, an dessen Ende eine Radhalterung zum Zusammenwirken mit dem Vorderrad oder Hinterrad des Motorrads vorgesehen ist. Obwohl dieser Motorradständer im Vergleich zum vorstehend beschriebenen Motorradständer (welcher unter dem Motorblock des Motorrads zu platzieren ist) am Vorder- oder Hinterrad des Motorrades angreifen kann und damit einen im Hinblick auf die Zugänglichkeit von Motorradbaugruppen günstigeren Eingriffspunkt bietet, ist auch hier eine nachteilbehaftete Wartung der hydraulischen Vorrichtung erforderlich. Ein weiterer Nachteil ist hier ebenfalls in der recht aufwändigen Konstruktion zu sehen.

Aus der DE 202 18 973 U1 ist ein demgegenüber recht einfach konstruierter Motorradständer bekannt. Offenbart wird hier ein zerlegbarer Montageständer für Motorräder, der im Wesentlichen aus Rund- oder Vierkantrohren besteht und eine V-artige Seitenansicht zweier beabstandet und parallel zueinander verlaufender gebogener Rohrabschnitte aufweist. Über den einen Schenkelbereich der V-artig gebogenen Rohre wird der Standkontakt mit dem Boden hergestellt, wogegen über den anderen Schenkelbereich der Rohre ein Aufbocken des Motorrads im Bereich der Zweiarmschwinge erfolgt. Auch dieser Motorradständer ist für Motorräder vorgesehen, welche nicht über einen Hauptständer verfügen, also lediglich mit einem Seitenständer ausgerüstet sind. Der einfach konstruierte Motorradständer kann in diesem Falle beispielsweise als Montageständer für einen Reifenwechsel genutzt werden.

Ein Nachteil dieser Lösung des Standes der Technik besteht jedoch darin, dass das Einsatzgebiet des Motorradständers lediglich auf Montagezwecke beschränkt ist. Da der Motorradständer darüber hinaus auch als eine Art "Reiseständer" gedacht ist und zu diesem Zwecke in seine Einzelteile zerlegbar ist, geht der damit verbundene Kleinbau auch zu Lasten der Standstabilität, welche beispielsweise für Transportzwecke aus Sicherheitsgründen unumgänglich ist.

Allgemein bekannt sind ferner auch Motorradständer, welche sich auch für Transportzwecke eignen und im Wesentlichen aus einem waagerechten Basisrahmenteil zur Herstellung eines sicheren Standkontakts mit dem Boden bestehen, an dem ein senkrechtes Anschlagrahmenteil zur Begrenzung der Anschlagposition des Vorderrades oder Hinterrades angeordnet ist. Ein Nachteil dieser im Stand der Technik allgemein bekannten Motorradständers besteht jedoch darin, dass diese nicht oder nur sehr umständlich an verschiedene Motorradtypeninsbesondere Reifengrößen - anpassbar sind, so dass sich dieses Grundkonstruktionsprinzip bisher noch nicht durchsetzen konnte.

Ein gattungsgemäßer Motorradständer geht aus der GB 2 303 109 A hervor, Dieser ist aus einem waagerechten Basisrahmenteils mit senkrechtem Anschlagrahmenteil gebildet und weist eine endseitig des waagerechten Basisrahmenteils angelenkte Anschlageinheit auf, welche wippenartig ausgebildet ist und nach Überfahren des Vorderrades einen Anschlag für den Reifen darstellt. Eine weitere Anschlageinheit ist ortsfest endseitig des senkrechten Anschlagrahmenteils angelenkt. Zwar sind beide Anschlageinheiten um ihren Schwenkpunkt bewegbar, so dass diese sich an den Reifen des Rades anlegen können; jedoch ist die Aufnahme unterschiedlich großer Räder mit diesem Motorradständer mangels Anpassbarkeit schwer möglich.

Es ist die Aufgabe der vorliegenden Erfindung ausgehend von dem letztgenannten Grundkonstruktionsprinzip einen werkstattgeeigneten Motorradständer zu schaffen, der einfach konstruiert ist und sich für unterschiedliche Motorradtypen universell zu Montage- und Transportzwecken einsetzen lässt.

Die Aufgabe wird ausgehend von einem Motorradständer gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass entlang eines waagerechten Basisrahmenteils mindestens eine stufenlos verstellbare Anschlageinheit zur Aufnahme des Reifens des Vorderrades oder Hinterrades und zum Andrücken desselben in Richtung eines senkrechten Anschlagrahmenteils vorgesehen ist.

Ein Vorteil des erfindungsgemäßen Motorradständers liegt darin, dass dieser ein sicheres Halten - auch schwerer Motorräder - in der aufrechten Parkposition gestattet wobei beim Einsatz des Motorradständers eine weitere Hilfsperson nicht erforderlich ist. Das Motorrad ist lediglich vorzugsweise mit dem Vorderrad vor die Anschlageinheit des waagerechten Basisrahmenteils zu fahren, bis das Vorderrad am senkrechten Anschlagrahmenteil zur Anlage kommt. Das Motorrad wird also im Prinzip über dessen Vorderrad oder Hinterrad in der aufrechten Parkposition gehalten. Eine zusätzliche Abspannung mit einem Seil gewährleistet weitere Sicherheit. Praxistests haben jedoch gezeigt, dass eine Abspannung auch gänzlich entfallen kann. Ein besonderer Vorteil der erfindungsgemäßen Lösung liegt darin, dass der Motorradständer aufgrund der stufenlos verstellbaren Anschlageinheiten an verschiedene Reifenbreiten und Reifendurchmesser zügig anpassbar ist. Eine Vorraussetzung zur Anpassung an verschiedene Reifendurchmesser, welche schon durch ein mehr oder weniger abgefahrenes Reifenprofil variieren können, erfolgt über die stufenlose Verstellung der Anschlageinheit in Richtung des senkrechten Anschlagrahmenteils oder hiervon weg. Somit zeichnet sich der erfindungsgemäße Motorradständer insbesondere durch eine an ganz unterschiedliche Motorradtypen universell anpassbare Verwendung aus. Da auf hydraulische Bauelemente und dergleichen vollständig verzichtet wird, ist der insoweit einfach konstruierte Motorradständer quasi wartungsfrei. Ein weiterer Vorteil des erfindungsgemäßen Motorradständers besteht darin, dass dieser modulartig zu einer Motorradständeranordnung erweiterbar ist, indem mehrerer gleichartige erfindungsgemäße Motorradständer nebeneinander gekoppelt werden können. Die sich hieraus ergebene Motorradständeranordnung lässt sich einsetzen für Großtransporte, Ausstellungen und dergleichen. Darüber hinaus ist es auch denkbar, das waagrechte Basisrahmenteil des erfindungsgemäßen Motorradständers derart zu verlängern, dass sich beide Räder mit dem Motorradständer aufnehmen lassen. Diese Motorradständeranordnung lässt sich beispielsweise einsetzen für einen sicheren Anhängertransport eines einzelnen Motorrads oder dergleichen.

Die variable Anpassung an verschiedene Reifenbreiten kann dagegen über ein Grundelement sowie mindestens ein Zusatzelement erreicht werden. Hierbei ist das Grundelement der Anschlageinheit im Profil im Wesentlichen V-förmig ausgebildet und für breite Reifengrößen geeignet, wogegen das hierin formschlüssig einlegbare, ebenfalls V-förmig ausgebildete Zusatzelement an schmale Reifengrößen angepasst ist. Über verschieden große Zusatzelemente kann ein breites Spektrum von üblichen Reifenbreiten abgedeckt werden.

Alternativ hierzu ist es auch möglich, dass die Anschlageinheit ein mit dem waagerechten Basisrahmenteil zusammenwirkendes Grundelement mit einem im wesentlichen V-förmigen Querschnitt umfasst, dessen Schenkelabschnitte derart aufeinander zu oder voneinander weg verstellbar sind, dass eine Anpassung an breite bis schmale Reifengrößen möglich ist.

Zur Verbesserung der Schwenkstabilität wird vorgeschlagen, zwischen der Anschlageinheit zur Aufnahme des Reifens und dem senkrechten Anschlagrahmenteil am Basisrahmenteil eine weitere, verschwenkbare Anschlageinheit anzuordnen, welche ebenfalls ein mit dem waagerechten Basisrahmenteil zusammenwirkendes Grundelement für breite Reifengröße sowie mindestens ein hierin einlegbares Zusatzelement für schmale Reifengrößen umfasst. Diese weitere Anschlageinheit kann in einfacher Weise lediglich über eine Schwenkachse derart verschwenkbar am waagerechten Basisrahmenteil angeordnet werden, dass eine automatische Lagerausrichtung der Anschlageinheit bei Kontaktierung mit dem Reifen erfolgt. Insoweit ist an dieser Stelle eine stufenlos entlang des waagrechten Basisrahmenteils verstellbare Anschlageinheit entbehrlich.

Weiterhin ist seitens des senkrechten Anschlagrahmenteils eine dem gegenüber ortsfeste, dritte Anschlageinheit zur Aufnahme des Reifens des Vorderrades beziehungsweise Hinterrades vorgesehen. Diese ist ebenso wie die erste und zweite Anschlageinheit mit einem im Wesentlichen V-förmigen Profil zur Anpassung an den Reifen versehen und kann ebenfalls ein Grundelement für breite Reifengrößen sowie mindestens ein hierin formschlüssig einlegbares Zusatzelement für schmale Reifengrößen aufweisen. An dieser Stelle sei angemerkt, dass das Grundelement sowie die Zusatzelemente aller Anschlageinheiten des Motorradständers zur Rutschhemmung gegenüber dem hieran zur Anlage kommenden Reifen mit einem Feinstrukturpulverlack oder dergleichen beschichtet werden können.

Gemäß einer weiteren, die Erfindung im Hinblick auf eine möglichst einfache Konstruktion verbessernden Maßnahme nicht vorgeschlagen, dass das waagrechte Basisrahmenteil aus einem Paar von zueinander parallel verlaufenden Profilschienen aufgebaut ist. Hierfür kann zur weiteren Aufwandsminimierung auf standartisierte, genutete Leichtmetall-Stranggussprofile zurückgegriffen werden.

Zwischen den parallel zueinander verlaufenden Profilschienen des Basisrahmenteils kann die stufenlos verstellbare erste Anschlageinheit vorteilhafterweise über deren Längsnuten geführt werden und an den beiden Profilschienen mittels eines Klemmmechanismus arretiert werden.

Vorzugsweise besteht ein für diese Zwecke geeigneter Klemmmechanismus aus einem mit der jeweiligen Längsnut korrespondierenden Nutstein, der mit einer zentralen Gewindebohrung versehen ist, in die das Gewinde eines zugeordneten Klemmhebels zum Eingriff kommt, so dass über eine Drehbewegung des Klemmhebels ein Arretieren oder Lösen der verstellbaren Anschlageinheit erfolgt. Die Längsnuten an den parallel verlaufenden Profilschienen des waagrechten Basisrahmenteils weisen zu diesem Zwecke ein im Wesentlichen T-förmiges Nutprofil auf oder ein Nutprofil, welches geeignet ist, um Nutsteine aufzunehmen. Die Steigung des Gewindes im Nutstein sowie am Klemmhebel sollte so gewählt werden, dass eine viertel bis halbe Umdrehung des Klemmhebels ausreichend ist, um ein Klemmen oder Lösen zu bewirken.

Eine weitere, die Erfindung verbessernde Maßnahme besteht darin, dass das senkrechte Anschlagrahmenteil ebenfalls aus einer Profilschiene besteht, die über eine weitere, quer hierzu verlaufende Profilschiene zur Erzielung der Standfestigkeit mit den beiden parallel verlaufenden Profilschienen des waagrechten Basisrahmenteils verbunden ist. Somit sind insgesamt vier einzelne Profilschienen ausreichend, um den Rahmen des erfindungsgemäßen Motorradständers zu bilden. Zusätzlich können endseitig der querverlaufenden Profilschiene je eine Aufnahmeöse für die Befestigung eines Abspannseils vorgesehen werden. Wahlweise können unterhalb des waagerechten Basisrahmenteils auch Laufrollen zum Verschieben des Motorradständers oder alternativ hierzu Gummistücke zur Rutschhemmung des Motorradständers angebracht werden, je nach gewünschten Einsetzzweck (Werkstatt bzw. Transport).

Weiterer die Erfindung verbessernde Maßnahmen werden nachstehend gemeinsam mit der Beschreibung eines bevorzugten Ausführungsbeispiels der Erfindung anhand der Zeichnungen näher dargestellt. Es zeigt:
- Figur 1: eine Seitenansicht eines Motorradständers während des Einsatzes,
- Figur 2: eine weitere Seitenansicht des Motorradständers nach Figur 1 in Explosionsdarstellung,
- Figur 3: eine Draufsicht des Motorradständers nach Figur 1 in Explosionsdarstellung,
- Figur 4: eine Seitenansicht einer ersten Anschlageinheit mit Mitteln zur stufenlosen Verstellung in Explosionsdarstellung,
- Figur 5: eine Seitenansicht einer zweiten (verschwenkbaren) Anschlageinheit, und
- Figur 6: eine Seitenansicht einer dritten (ortsfesten) Anschlageinheit.

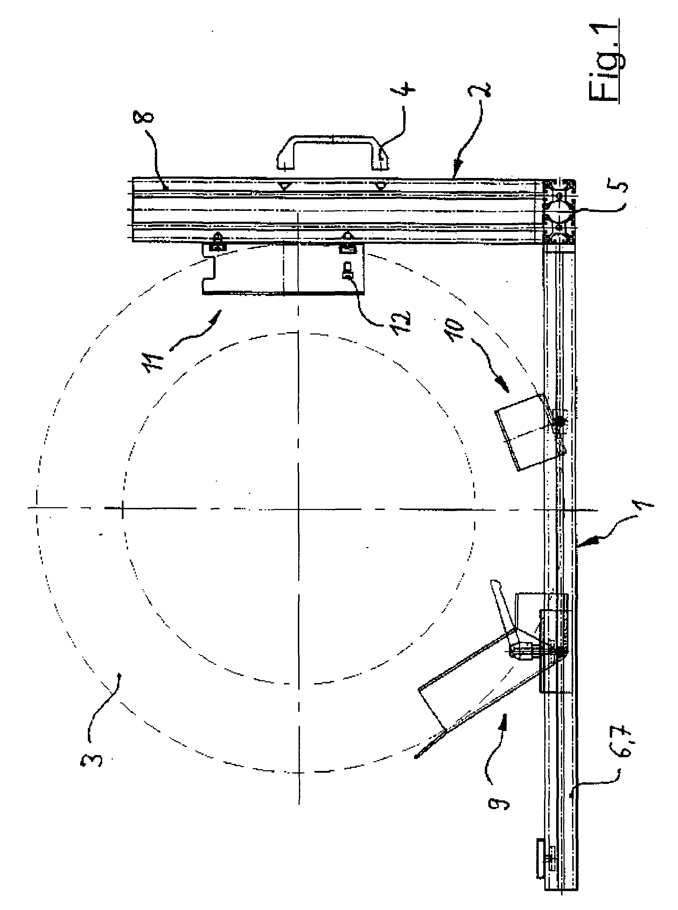

Der aus der Figur 1 ersichtliche Motorradständer besteht im Wesentlichen aus einem waagerechten Basisrahmenteil 1 sowie einem senkrecht hierzu angeordneten Anschlagrahmenteil 2. Das Basisrahmenteil 1 dient zur Herstellung eines sicheren Standkontakts des Motorradständers auf dem Boden, wogegen das senkrechte Anschlagrahmenteil 2 einer Begrenzung der Anschlagposition des - hier durch Strichlinie angedeuteten - Vorderrades 3 eines Motorrads dient. Zur besseren Handhabung des Motorradständers weist das senkrechte Anschlagrahmenteil 2 einen angeschraubten Handgriff 4 auf. Das senkrechte Anschlagrahmenteil 2 ist mit dem waagerechten Basisrahmenteil über ein quer hierzu verlaufende und daher nur im Profil erkennbare Profilschiene 5 verbunden. Aus ähnlichen, parallel verlaufenden Profilschienen 6, 7 ist das Basisrahmenteil 1 gebildet; das Anschlagrahmenteil 2 ist ebenfalls aus einer Profilschiene 8 gebildet. Alle Profilschienen 5 bis 8 bestehen aus einem standartisierten, genuteten Leichtmetall-Stranggussprofil.

Entlang des waagerechten Basisrahmenteils 1 ist eine stufenlos verstellbare Anschlageinheit 9 zur Aufnahme des Reifens des Vorderrades 3 sowie auch zum Andrücken desselben in Richtung des senkrechten Anschlagrahmenteils 2 vorgesehen. Letzteres wird durch eine bezüglich der Längsachse des Basisrahmenteils 1 angestellte Position des rückwärtigen Abschnitts der Anschlageinheit 9 erreicht. Zur Verbesserung der Schwenkstabilität des vom Motorradständer in der aufrechten Parkposition zu haltenden Motorrads zwischen der Anschlageinheit 9 und dem senkrechten Anschlagrahmenteil 2 ist am waagerechten Basisrahmenteil 1 eine zweite Anschlageinheit 10 vorgesehen, welche zwar nicht entlang des waagerechten Basisrahmenteils 1 verstellbar ist, sondern entlang dieser Richtung ortsfest am Basisrahmenteil 1 angelenkt ist, so dass durch ein Verschwenken der zweiten Anschlageinheit 10 eine Lageanpassung des Vorderrades 3 des vom Motorradständer aufzunehmenden Motorrades erfolgt. Zusätzlich weist das senkrechte Anschlagrahmenteil 2 eine demgegenüber ortsfeste, dritte Anschlageinheit 11 auf, die am senkrechten Anschlagrahmenteil 2 durch eine Verschraubung 12 befestigt ist und zur Aufnahme des Reifens des Vorderrades 3 an einer weiteren Umfangstelle vorgesehen ist.

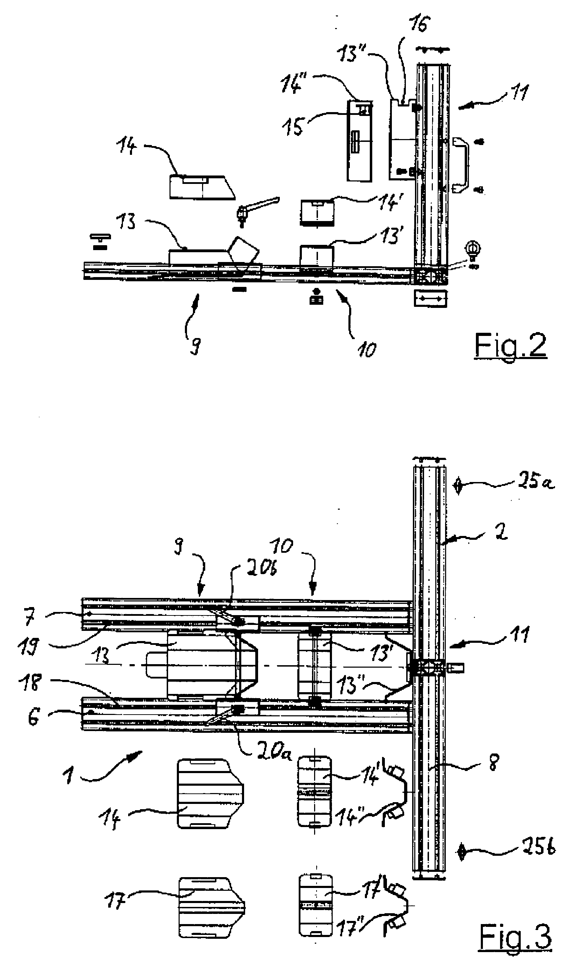

Gemäß Figur 2 ist jede Anschlageinheit 9 bis 11 mehrteilig aufgebaut. So besteht die erste Anschlageinheit 9 - welche hier in ihrer Ausgangsposition dargestellt ist - aus einem mit dem waagerechten Basisrahmenteil 1 zusammenwirkenden Grundelement 13, welches zur Aufnahme breiter Reifengrößen vorgesehen ist. Durch Einlegen eines separaten Zusatzelements 14 in das Grundelement 13 kann die Aufnahme auch an schmale Reifengrößen angepasst werden. Genauso besteht auch die zweite Anschlageinheit 10 aus einem derartigen Grundelement 13' und einem separaten, hierin einlegbaren Zusatzelement 14'; auch die dritte Anschlageinheit 11 ist aus einem Grundelement 13" für breite Reifengrößen und einem hierin einlegbaren Zusatzelement 14" aufgebaut. Alle Zusatzelemente 14, 14', 14" sind formschlüssig mit den zugeordneten Grundelementen 13, 13', 13" verbunden. So ist das Zusatzelement 14" des am senkrechten Anschlagrahmenteils 2 befestigten Grundelements 13" durch Einhaken einer am Zusatzelement 14" ausgebildeten Lasche 15 in eine korrespondierende Ausnehmung 16 seitens des Grundelements 13" herstellbar. Ähnliche Lasche-Ausnehmung-Paarungen sind auch an den übrigen Anschlageinheiten 9 und 10 vorgesehen.

Gemäß Figur 3 kann die erste Anschlageinheit 9 neben dem Grundelement 13 und dem Zusatzelement 14 auch ein weiteres Zusatzelement 17 für eine noch schmalere Reifenbreite erhalten. Analog hierzu wäre im Hinblick auf die zweite Anschlageinheit 10 zusätzlich zu deren Grundelement 13' und Zusatzelement 14' das weiteres Zusatzelement 14" erforderlich; auch die dritte Anschlageinheit 11 mit Grundelement 13" und Zusatzelement 14" ist insoweit mit einem weiteren Zusatzelement 17" auszustatten.

Zwischen den beiden zueinander parallel verlaufenden Profilschienen 6 und 7, welche das waagerechte Basisrahmenteil 1 bilden, ist die erste Anschlageinheit 9 über Längsnuten 18 und 19 in den Profilschienen 6 beziehungsweise 7 geführt und an den Profilschienen 6 und 7 mittels eines beidseitigen Klemmmechanismus 20a, 20b arretierbar.

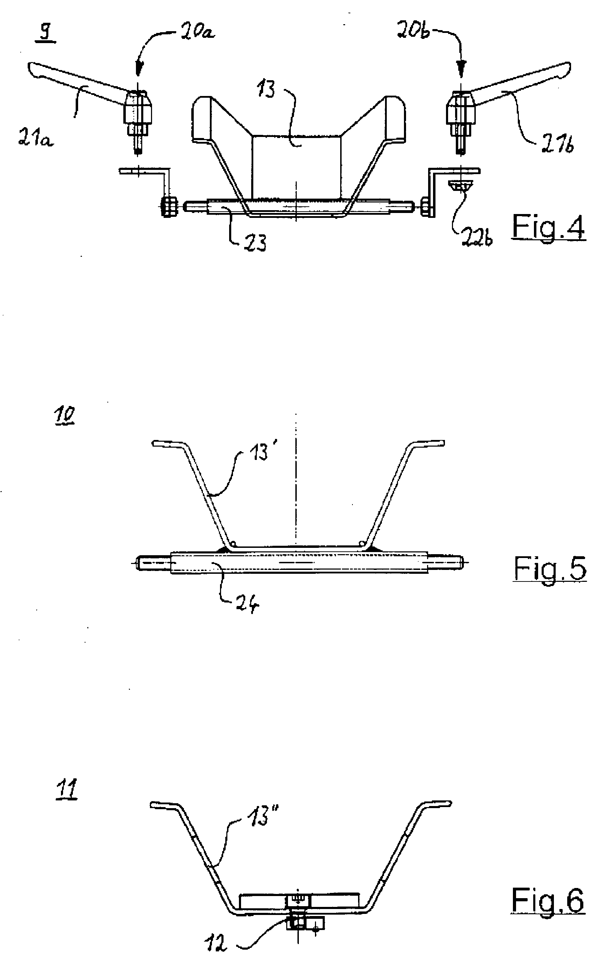

Gemäß Figur 4 besteht der Klemmmechanismus 20a, 20b der hier isoliert dargestellten ersten Anschlageinheit 9 aus beidseits des Grundelements 13 angeordneten Klemmhebeln 21 a und 21b, deren Gewinde in korrespondierende Nutsteine 21b (hier nur einer gezeigt) zum Eingriff kommen, so dass über eine Drehbewegung des Klemmhebels 20a beziehungsweise 20b ein Arretieren oder Lösen der verstellbaren Anschlageinheit 9 von den zugeordneten - und hier nicht weiter dargestellten - Profilschienen 6 und 7 erfolgt. Das Grundelement 13 ist gegenüber dem - hier nicht weiter dargestellten - waagerechten Basisrahmenteil 1 über eine Schwenkachse 23 verschwenkbar, um hiermit das Grundelement 13 von der abgeklappten Ausgangsstellung in die angehobene Betriebsstellung zu überführen.

Gemäß Figur 5 ist die zweite Anschlageinheit 10 ebenfalls mit einer Schwenkachse 24 ausgestattet, welche hier eine Anpassung des zugeordneten Grundelements 13' an den Reifen ermöglicht.

Gemäß Figur 6 ist die dritte Anschlageinheit 11 demgegenüber mittels der Verschraubung 12 ortsfest an dem - hier nicht weiter dargestellten - senkrechten Anschlagrahmenteils 2 anbringbar.

Die Erfindung ist nicht beschränkt auf das vorstehend beschriebene bevorzugte Ausführungsbeispiel. Es sind vielmehr auch Abwandlungen hiervon denkbar, die vom Schutzbereich der nachfolgenden Ansprüche Gebrauch machen. So ist es beispielsweise auch denkbar, den Klemmmechanismus zur Erzielung einer stufenlos verstellbaren Anschlageinheit auf andere Weise auszuführen. Ebenso kann der Satz von Zusatzelementen für schmalere Reifengrößen, welche ineinander oder in das Grundelement einlegbar sind, mehr als zweiteilig ausgeführt sein.

### Bezugszeichenliste

- **1**: Basisrahmenteil(waagerecht)
- **2**: Anschlagrahmenteil (senkrecht)
- **3**: Vorderrad
- **4**: Handgriff
- **5**: Profilschiene
- **6**: Profilschiene
- **7**: Profilschiene
- **8**: Profilschiene
- **9**: erste Anschlageinheit (stufenlos verstellbar)
- **10**: zweite Anschlageinheit (verschwenkbar)
- **11**: dritte Anschlageinheit (ortsfest)
- **12**: Verschraubung
- **13**: Grundelement
- **14**: Zusatzelement
- **15**: Lasche
- **16**: Ausnehmung
- **17**: weiteres Zusatzelement
- **18**: Längsnut
- **19**: Längsnut
- **20**: Klemmmechanismus
- **21**: Klemmhebel
- **22**: Nutstein
- **23**: Schwenkachse
- **24**: Schwenkachse
- **25**: Aufnahmeöse

## Patentansprüche

1. Motorradständer zum Halten eines Zweirades, insbesondere eines Motorrades, in der aufrechten Parkposition über dessen Vorderrad (3) oder Hinterrad, mit einem waagerechten Basisrahmenteil (1) zur Herstellung eines sicheren Standkontakts mit dem Boden, an dem ein senkrechtes Anschlagrahmenteil (2) zur Begrenzung der Anschlagposition des Vorderrades (3) bzw. Hinterrades angeordnet ist, woran eine demgegenüber ortsfeste, Anschlageinheit (11) zur Aufnahme des Reifens des Vorderrades (3) bzw. Hinterrades vorgesehen ist,
**dadurch gekennzeichnet, dass** entlang des waagerechten Basisrahmenteils (1) mindestens eine stufenlos verstellbare Anschlageinheit (9) zur Aufnahme des Reifens des Vorderrades (3) bzw. Hinterrades und zum Andrücken desselben in Richtung des senkrechten Anschlagrahmenteils (2) vorgesehen ist.

2. Motorradständer nach Anspruch 1,
**dadurch gekennzeichnet, dass** die stufenlos verstellbare Anschlageinheit (9) ein mit dem waagerechten Basisrahmenteil (1) zusammenwirkendes Grundelement (13) mit einem im wesentlichen V-formigen Querschnitt für breite Reifengrößen sowie mindestens ein hierin einlegbares, korrespondierendes Zusatzelement (14) für schmale Reifengrößen umfasst.

3. Motorradständer nach Anspruch 1,
**dadurch gekennzeichnet, dass** die stufenlos verstellbare Anschlageinheit (9) ein mit dem waagerechten Basisrahmenteil (1) zusammenwirkendes Grundelement mit einem im wesentlichen V-förmigen Querschnitt umfasst, dessen Schenkelabschnitte derart aufeinander zu oder voneinander weg verstellbar sind, dass eine Anpassung an breite bis schmale Reifengrößen möglich ist.

4. Motorradständer nach Anspruch 1,
**dadurch gekennzeichnet, dass** zur Verbesserung der Schwenkstabilität zwischen der Anschlageinheit (9) zur Aufnahme des Reifens am waagerechten Basisrahmenteil (1) und dem senkrechten Anschlagrahmenteil (2) am waagerechten Basisrahmenteil (1) eine verschwenkbare, zweite Anschlageinheit (10) angeordnet ist,

5. Motorradständer nach Anspruch 4,
**dadurch gekennzeichnet, dass** die zweite Anschlageinheit (10) und die gegenüber dem senkrechten Anschlagrahmenteil ortsfeste Anschlageinheit (11) ebenfalls je aus einem Grundelement (13' bzw. 13") für breite Reifengrößen sowie mindestens einem hierin einlegbaren Zusatzelement (14' bzw. 14") für schmale Reifengrößen aufgebaut ist.

6. Motorradständer nach Anspruch 5,
**dadurch gekennzeichnet, dass** alle Zusatzelemente (14, 14', 14") über eine formschlüssige Verbindung mit den zugeordneten Grundelementen (13, 13', 13") zusammenwirken.

7. Motorradständer nach einem der vorstehenden Ansprüche,
**dadurch gekennzeichnet, dass** das waagerechte Basisrahmenteil (1) aus einem Paar von zueinander parallelverlaufenden Profilschienen (6, 7) besteht.

8. Motorradständer nach Anspruch 7,
**dadurch gekennzeichnet, dass** zwischen den parallelverlaufenden Profilschienen (6, 7) des Basisrahmenteils (1) die stufenlos verstellbare erste Anschlageinheit (9) über Längsnuten (18, 19) geführt ist und an den Profilschienen (6; 7) mittels eines Klemmmechanismus (20a, 20b) arretierbar ist.

9. Motorradständer nach Anspruch 8,
**dadurch gekennzeichnet, dass** der Klemmmechanismus (20a, 20b) aus einem mit der jeweiligen, ein im wesentlichen T-förmiges Nutprofil aufweisenden Längsnut (18; 19) korrespondierenden Nutstein (22a; 22b) besteht, der mit einer Gewindebohrung versehen ist, in die das Gewinde eines zugeordneten Klemmhebels (21a, 21b) zum Eingriff kommt, so dass über eine Drehbewegung des Klemmhebels (21a, 21b) ein Arretieren oder Lösen der verstellbaren ersten Anschlageinheit (9) erfolgt.

10. Motorradständer nach Anspruch 7,
**dadurch gekennzeichnet, dass** das senkrechte Anschlagrahmenteil (2) eine Profilschiene (8) umfasst, die über eine weitere, querverlaufende Profilschiene (5) zur Erzielung der Standfestigkeit mit den beiden parallelverlaufenden Profilschienen (6, 7) des waagerechten Basisrahmenteil (1) verbunden ist.

11. Motorradständer nach einem der vorstehenden Ansprüche,
**dadurch gekennzeichnet, dass** die Profilschienen (5 bis 8) aus einem standartisierten, genuteten Leichtmetall-Stranggußprofil hergestellt sind.

12. Motorradständer nach einem der vorstehenden Ansprüche,
**dadurch gekennzeichnet, dass** endseitig der querverlaufenden Profilschiene (8) je eine Aufnahmeöse (25a, 25b) für die Befestigung eines Abspannseils vorgesehen ist.

13. Motorradständer nach einem der vorstehenden Ansprüche,
**dadurch gekennzeichnet, dass** unterhalb des waagerechten Basisrahmenteils (1) Laufrollen zum Verschieben oder Gummistücke zur Rutschhemmung anbringbar sind.

## Claims

1. A motorcycle stand for holding a bike, in particular a motorcycle, in the upright parking position over its front wheel (3) or rear wheel, comprising, for the establishment of a secure standing contact with the floor, a horizontal base frame (1) on which, for limiting the fastening position of the front wheel (3) or the rear wheel, respectively, a vertical fastening frame part (2) is arranged on which a fastening unit (11), fixed with respect to the latter, is provided to receive the tyre of the front wheel (3) or the rear wheel, respectively,
**characterized in that** at least one steplessly adjustable fastening unit (9) is provided along the horizontal base frame part (1) for receiving the tyre of the front wheel (3) or the rear wheel, respectively, so that the latter is urged toward the vertical fastening part (2).

2. The motorcycle stand according to claim 1,
**characterized in that** the steplessly adjustable fastening unit (9) comprises a base element (13) with an essentially V-shaped cross-section cooperating with the horizontal base frame part (1), for broad tyres, and at least one additional element (14) insertable within it for narrow tyre sizes.

3. The motorcycle stand according to claim 1,
**characterized in that** the steplessly adjustable fastening unit (9) comprises a base element with an essentially V-shaped cross-section cooperating with the horizontal base frame part (1), the leg portions of which can be adjusted toward or away from each other in such a way that an adjustment to a range of tyre sizes, from narrow to broad, is possible.

4. The motorcycle stand according to claim 1,
**characterized in that** to improve the pivoting stability between the fastening unit (9) for receiving the tyre on the horizontal base frame part (1) and the vertical fastening frame part (2) a pivotable second fastening unit (10) is arranged on the horizontal base frame part (1).

5. The motorcycle stand according to claim 4,
**characterized in that** the second fastening unit (10) and the fastening unit (11) fixed with respect to the vertical fastening frame part, is also constructed of a base element (13' or 13") for broad tyres and at least one additional element (14' or 14") insertable within the latter for narrow tyres.

6. The motorcycle stand according to claim 5,
**characterized in that** all additional elements (14, 14', 14") interact with their associated base elements (13, 13', 13") via a positive fit.

7. The motorcycle stand according to any one of the preceding claims,
**characterized in that** the horizontal base frame element (1) consists of a pair of profile rails (6, 7) extending in parallel to each other.

8. The motorcycle stand according to claim 7,
**characterized in that**, between the profile rails (6, 7) extending in parallel to each other, of the base frame part (1), the steplessly adjustable first fastening unit (9) is guided via longitudinal channels (18, 19) and can be locked on the profile rails (6; 7) by means of a clamping mechanism (20a, 20b).

9. The motorcycle stand according to claim 8,
**characterized in that** the clamping mechanism (20a, 20b) consists of a groove runner piece (22a; 22b), which corresponds to each longitudinal channel (18; 19) essentially having a T-shaped channel profile and is provided with a threaded bore for engagement with a thread of an associated clamping lever (21 a, 21 b), so that locking or releasing of the adjustable first fastening unit (9) is carried out by rotating the clamping lever (21a, 21b).

10. The motorcycle stand according to claim 7,
**characterized in that** the vertical fastening frame part (2) comprises a profile rail (8) connected with the two profile rails (6, 7) extending in parallel of the horizontal base frame part (1) via another profile rail (5) extending in a transverse direction to achieve stability.

11. The motorcycle stand according to any one of the preceding claims,
**characterized in that** the profile rails (5 to 8) are standardised, channelled extruded light metal sections.

12. The motorcycle stand according to any one of the preceding claims,
**characterized in that** a receiving eye (25a, 25b) for attaching a guy rope is provided at each end of said transversely-extending profile rail (8).

13. The motorcycle stand according to any one of the preceding claims,
**characterized in that** castors for displacement or rubber pieces for slippage prevention are attachable below the horizontal base frame part (1).

## Revendications

1. Support de motocyclette pour maintenir un deux-roues, en particulier une motocyclette, dans la position de stationnement dressée au moyen de sa roue avant (3) ou de sa roue arrière, comprenant une partie de cadre de base horizontale (1) pour établir un contact de stabilité sûr avec le sol, sur laquelle est agencée une partie de cadre verticale formant butée (2) pour limiter la position de venue en butée de la roue avant (3) ou de la roue arrière, et sur laquelle est prévue une unité de butée stationnaire (11) pour recevoir le pneumatique de la roue avant (3) ou de la roue arrière,
**caractérisé en ce que**, le long de la partie de cadre de base horizontale (1) est prévue au moins une unité de butée (9) réglable en continu pour recevoir le pneumatique de la roue avant (3) ou de la roue arrière, et pour presser celui-ci en direction de la partie de cadre verticale formant butée (2).

2. Support de motocyclette selon la revendication 1,
**caractérisé en ce que** l'unité de butée (9) réglable en continu comprend un élément de base (13) qui coopère avec la partie de cadre de base horizontale (1) avec une section sensiblement en forme de V pour des pneumatiques de taille large, ainsi qu'au moins un élément additionnel correspondant (14) susceptible d'être mis en place dans celui-ci pour des pneumatiques de taille étroite.

3. Support de motocyclette selon la revendication 1,
**caractérisé en ce que** l'unité de butée (9) réglable en continu comprend un élément de base qui coopère avec la partie de cadre de base horizontale (1) avec une section sensiblement en forme de V, dont les tronçons de côté sont déplaçables en rapprochement ou en éloignement l'un de l'autre de manière à rendre possible une adaptation à des pneumatiques de taille large à étroite.

4. Support de motocyclette selon la revendication 1,
**caractérisé en ce que**, pour améliorer la stabilité au renversement, il est prévu sur la partie de cadre de base horizontale (1) une seconde unité de butée (10) susceptible de pivoter, agencée entre l'unité de butée (9) pour recevoir le pneumatique sur la partie de cadre de base horizontale (1) et la partie de cadre de butée verticale (2).

5. Support de motocyclette selon la revendication 4,
**caractérisé en ce que** la seconde unité de butée (10) et l'unité de butée stationnaire (11) par rapport à la partie de cadre de butée verticale sont réalisées également chacune d'un élément de base (13', ou 13 ") pour les pneumatiques de taille large, ainsi que d'au moins un élément additionnel (14', ou 14"), susceptible d'être mis en place dans celui-ci, pour des pneumatiques de taille étroite.

6. Support de motocyclette selon la revendication 5,
**caractérisé en ce que** tous les éléments additionnels (14, 14', 14") coopèrent avec les éléments de base associés (13, 13', 13") via une liaison à coopération de formes.

7. Support de motocyclette selon l'une des revendications précédentes,
**caractérisé en ce que** la partie de cadre de base horizontale (1) est constituée d'une paire de rails profilés (6, 7) s'étendant parallèlement l'un à l'autre.

8. Support de motocyclette selon la revendication 7,
**caractérisé en ce que** la première unité de butée (9) réglable en continu est guidée entre les rails profilés (6, 7) s'étendant parallèlement, de la partie de cadre de base (1), via des gorges longitudinales (18, 19) et est susceptible d'être arrêtée sur les rails profilés (6, 7) au moyen d'un mécanisme de serrage (20a, 20b).

9. Support de motocyclette selon la revendication 8,
**caractérisé en ce que** le mécanisme de serrage (20a, 20b) est constitué d'un coulisseau (22a, 22b) correspondant à la gorge longitudinale respective (18, 19) qui présente essentiellement un profil en forme de T, le coulisseau étant pourvu d'un perçage taraudé dans lequel vient s'engager le filetage d'un levier de serrage associé (21a, 21b), de sorte qu'un blocage ou une libération de la première unité de butée réglable (9) a lieu au moyen d'un mouvement tournant du levier de serrage (21a, 21b).

10. Support de motocyclette selon la revendication 7,
**caractérisé en ce que** la partie de cadre de butée verticale (2) comprend un rail profilé (8) qui est relié aux deux rails profilés parallèles (6, 7) de la partie de cadre de base horizontale (1) via un autre rail profilé (5) s'étendant transversalement, pour atteindre la stabilité en situation debout.

11. Support de motocyclette selon l'une des revendications précédentes, **caractérisé en ce que** les rails profilés (5 à 8) sont réalisés à partir d'un profilé extrudé standard en métal léger présentant une gorge.

12. Support de motocyclette selon l'une des revendications précédentes, **caractérisé en ce qu'**un oeillet récepteur (25a, 25b) respectif destiné à la fixation d'un câble d'arrimage est prévu du côté extrémité du rail profilé transversal (8).

13. Support de motocyclette selon l'une des revendications précédentes, **caractérisé en ce que** des galets de roulement destinés au déplacement ou des pièces en caoutchouc destinées à empêcher un glissement sont susceptibles d'être rapportés au-dessous de la partie de cadre de base horizontale (1).
